# EUROPEAN PATENT SPECIFICATION

(11) **EP 1 392 615 B1**
(45) Date of publication and mention of the grant of the patent: **19.12.2012**
(21) Application number: 02769101.3
(22) Date of filing: 23.04.2002
(51) Int. Cl.: C04B 18/12

(54) **BUILDING AND OTHER MATERIALS CONTAINING TREATED BAUXITE TAILINGS AND PROCESS FOR MAKING SAME**
BAU- UND ANDERE MATERIALIEN MIT BEHANDELTEN BAUXITABFÄLLEN UND VERFAHREN ZU IHRER HERSTELLUNG
MATERIAUX DE CONSTRUCTION ET AUTRES MATERIAUX CONTENANT DES RESIDUS DE BAUXITE TRAITES, AINSI QUE PROCEDE DE FABRICATION ASSOCIE

(30) Priority: 02.05.2001 US 287669 P
(43) Date of publication of application: 03.03.2004
(73) Proprietor: Jaquays, Charles D., St Croix, Virgin Islands 00851 (US)
(72) Inventor: Jaquays, Charles D., St Croix, Virgin Islands 00851 (US)
(74) Representative: Meissner, Bolte & Partner
(86) International application number: PCT/US2002/012490
(87) International publication number: WO 2002/089940

(56) References cited:
- GB-A- 1 110 168
- US-A- 3 985 567
- US-A- 3 985 567
- US-A- 4 353 749
- US-A- 4 680 059
- US-A- 4 680 059
- US-A- 4 810 682
- US-A- 4 810 682
- US-A- 5 554 352
- US-A- 5 554 352
- US-A- 5 931 772
- US-A- 5 931 772
- DATABASE WPI Week 197946 Thomson Scientific, London, GB; AN 1979-83542B XP002546537 -& JP 54 130628 A (AGENCY OF IND SCI & TECHNOLOGY) 11 October 1979 (1979-10-11)

## Description

### TECHNICAL FIELD

This invention relates to a process for treating waste streams containing bauxite tailings to neutralize alkali metal hydroxide present, such as sodium hydroxide to obtain a product that can be incorporated into building or other materials, such as bricks to enhance their properties. The invention further relates to enhanced building materials containing tailing material treated in accordance with the process of the invention.

### BACKGROUND ART

The Bayer process for alumina production from bauxite results in the formation of large quantities of "red mud" or tailings, which are both a source of pollution and a waste of a potentially valuable mineral resource. It would, accordingly, be advantageous to have a process which efficiently utilizes these tailings as a useful industrial product.

In more detail, according to the conventional process, bauxite waste red mud is treated with acid to remove sodium therefrom and to obtain commercially useful material therefrom, wherein the following process steps are performed: suspending the waste red mud which has been dried in water; titrating the suspension with a molar solution of hydrochloric acid corresponding to the sodium content of the red mud until the pH of the suspension is between 5.5 to 6; continuously agitating the suspension during titration; allowing the suspension to settle after titration; separating the liquid portion containing sodium chloride from the solid portion; washing said solid portion until portions of the filtrate from the washings yield substantially no crystals on evaporation to dryness; and converting said solid portion to a dry powder.

The document JP 54 130628 A relates to a process for obtaining a red pigment from an industrial waste by decomposing a red solid slurry with a mineral acid. A red solid slurry is adjusted to ph less then 4 by adding a mineral acid. The slurry is then neutralized.

U.S. patent no. 3,985,567 to Iwu describes a process for combining treated bauxite tailings with clay and heating in an oven to obtain a brick product.

U.S. patent no. 4,133,866 to Lokatos et al. describes a process for separating bound sodium from red mud residue In which ferric sulfate is used to extract the sodium content.

U.S. patent no. 5,554,352 to Jaques et al. describes treating virgin bauxite to produce pozzolan for use in concrete products.

### DISCLOSURE OF THE INVENTION

In accordance with the present Invention, a process is provided for treating waste streams containing bauxite tallings to render them suitable for incorporation into useful construction materials, such as bricks, that are formed from cementi-tious material. The invention further provides an improved building material in which bauxite tailings which have been treated with a mineral add to neutralize alkali metal hydroxides which can then be combined with a cementitious material and cured to provide a superior construction material. Prior to combining with cementitious or other material, water and all or a portion of the alkali metal salts formed by the neutralization are removed.

### BEST MODES FOR CARRYING OUT INVENTION

### AND INDUSTRIAL APPLICABILITY

Initially, in accordance with the invention, bauxite tailings are comminuted to a homogeneous powder that can pass through a 1/16" or smaller screen mesh, and water is added to the tailings. The addition of the water takes place while vigorously agitating the mixture. Sufficient water is added so that the slurry will flow freely and uniformly. The desired consistency and viscosity is approximately that of non-gelatinous house paint. Once this consistency is reached, an acid is added to the slurry in sufficient quantity, (i.e. 1 molar weight of hydrogen for each mole of sodium present in the tailings) during the agitation procedure, thereby stripping the sodium atoms from their hydroxyl ions. Whereupon a hydrogen atom from the acid exchanges positions with a sodium atom from the caustic soda (sodium hydroxide) and forms water. The sodium ion takes up the vacancy left by the hydrogen atom to form a salt by-product. The specific salt is determined by the original mineral acid used, e.g. sulfuric acid would form sodium sulfate, hydrochloric acid would form sodium chloride. These salts are in solution and the slurry is separated either by centrifuge or by "slaking" or by any other means available. The salts are then separated from the water by distillation, or any other means, so that the water can be recycled to continue the process and the salts sold as industrial chemicals.

It should be noted at this point that there are secondary and tertiary reactions that can and will take place when the acid is added to the somewhat basic slurry. It is for this reason that it in preferred to have as fine a slurry as practicable under the prevailing circumstances and that the fine slurry is in a state of vigorous agitation at the moment of the intromission of an acid, the purpose of which is to diminish the reaction time or, the "time until exposure" of the acid to the target compound (sodium hydroxide). Inevitably, some potassium, magnesium and aluminum as well as other elements will be caught up in the process, but not enough in these circumstances to inhibit the goal, which is to remove the sodium hydroxide from the bauxite tailings so that the tailings can then be stabilized and subsequently incorporated into the matrix of common building materials.

Once the slurry has been separated from the salt solution, it is then ready to be utilized as a component in common building materials, such as paver bricks. By way of example, the proportions of the individual components of the aggregate are the same as would be used for a "normal" paver brick except that the "stabilized bauxite tailings" are used in place of any 200 mesh fines that would normally be present. If they (200 mesh fines) are not used, then "stabilized bauxite tailings" would be added to the mixture at the proportion of about 20% by volume. In this instance, the best mode of forming the finished product is currently the industry standard process of utilizing hydraulic compaction in conjunction with simultaneous vibrational compaction during the forming process of the premixed aggregate.

The apparatus for making the concrete brick can have at least one visible surface having a "finished" face. The brick may be made by filling a mold with concrete mixture, vibrating the mold, and using a descending plunger to compress the concrete in the filled mold. At least one interior surface of the mold can have a textured surface used to form the texture in the brick. Following compression of the mixture, a movable sidewall of the mold is moved laterally away from the brick a distance sufficient for the textured surface of the mold wall to clear the textured surface of the brick when the mold is raised. In the case of a paver brick, the finished face would be formed by the plunger. With the plunger remaining in place, the mold is raised, following which, the plunger is raised, yielding the finished brick.

Once formed, the bricks should preferably be kept in a super saturated humidity environment and the bricks themselves should not be allowed to become "dry" during the first 168 hours of curing. The moisture levels can be maintained by housing the finished bricks in an enclosure that has a misting means that provides saturation wetting on regular intervals during the curing process. Superior performance/utilization characteristics are achieved when tailing content does not exceed the 30% by volume level.

It is further noted that if there are sufficient amounts of iron oxide in the mixture an aesthetically pleasing color is imparted to the mixture, very similar in shade to that of terra cotta. Further, the change in the pH of the aggregate, brought on by the addition of the acidic slurry, dramatically changes the "wetting" capabilities of the available water in the mixture. This results in a homogeneous crystalline structure of the concrete as it cures.

By using sulfuric acid as the primary reagent, and not removing the resulting salts that are formed from the neutralizing reaction that takes place, save for what is removed by separating the excess water from the slurry, the remaining sodium sulfate acts as a catalyst for the formation of the carbonatious crystals that characterize the internal crystalline structure of cementitious matrixes.

The method of the invention is illustrated by the following procedure: One part of bauxite tailings are suspended in three parts of water, a titration of the mixture is performed using one molar solution of sulphuric acid per mole of sodium in the tailings, until the mixture attains a pH 5.5-6.0. To successfully carry out the above, the mixture should be continuously agitated, keeping the particles of the mixture in - suspension. Once the mixture has reached the desired pH of 5.5-6.0, the process is terminated. The mixture is then left to settle and the filtrate is separated from the supernatant fluid by decantation and/or filtration. The residue does not need to be washed. Evaporation of the supernatant fluid will yield sodium sulfate, which, once refined, can be sold as an industrial chemical or electrolyzed and recycled back into the process.

As a by-product of the foregoing preparation procedure of the tailings and subsequent incorporation into cementitious media, the finished product has enhanced efflorescence resistance, that is, above and beyond the resistance levels of concrete products not incorporating bauxite tailings as well as those that do.

According to the present invention, when sulfuric acid is the selected mineral acid, sodium is selectively extracted from the tailings into solution as sodium sulfate without contaminating the solution with the sulfates of iron, titanium, silicon or aluminum. The residual red mud from the above, free from sodium hydroxide, can now be used for the production of construction materials. Previously, the relatively high percent of soda in the bauxite tailings has rendered the above-mentioned unusable as a constituent of construction materials.

The following examples further illustrate embodiments of the invention.

### Example 1

With 30% by volume of the treated Red Mud added to a cementitious aggregate using only Portland cement as the binding agent, a concrete "paver" brick was formed, and cured to a dimension required to satisfy the aesthetic and structural requirements of the building industry and the consuming public. The resulting brick had the following characteristics:
a. Compressive strength of 2,750 p.s.i.
b. Water absorption: 13.5%

### Example 2

With 30% by volume of the treated Red Mud added to a cementitious aggregate and with 30% by volume of the Portland cement component replaced with the finely ground silicate tailings, a concrete "paver" brick can be formed, and cured to any dimension required to satisfy the aesthetic and structural requirements of the building industry and the consuming public. The resulting brick will have the enhanced characteristics:
c. Compressive strength: greater than 3,000 p.s.i.
d. Water absorption: less than 13.5%

One face of a finished brick and, a "control" refractory brick from a kiln, were exposed at ambient temperature, to the 6800°F heat of a high capacity Oxy/Acetylene "Rosebud" (large tip used expressly for heating wide areas of workpieces). The results were as follows: After 15 minutes of direct exposure to the flame, the brick of the invention was unchanged. After 5 minutes of the same treatment, the "control" brick's face had glazed and begun to melt and "drool" off as a liquid.

A common waste by-product of the Bayer process is a silicate rich component generally referred to as "sand" or "black sand". The courser particles (the size of a grain of salt or larger) are' generally separated out of the process stream before the "digestion" phase of the Bayer process.

This constituent is typically discarded, either separately or in suspension with the waste slurry. This material can also be utilized as an adjunct to, but is not essential for, the production of finished goods.

These naturally occurring silicates demonstrably enhance many of the curing and physical characteristics of the product of the invention. If these silicates are present in/at any given tailings site, they can be separated (if they aren't already) and ground to a fine powder consistency and added to the Portland cement as an enhancing agent to Increase the strength and durability of the finished product. Optimal results are achieved when added to the Portland cement at a ratio of 30% silicates to 70% cement, however, improved product performance may be derived from just about any silicate proportion from about 5 to 50 percent. The "modified" Portland cement component is then admixed to a standard aggregate mixture along with the "stabilized red mud" of the present invention where water is added and the mixture is formed, vibrated and pressed to its finished shape and allowed to cure in a cool water saturated environment for at least 7 days. The maximum compression strength is reached by about the 28th day.

The process of the present invention employs a "cold process" for the stabilized bauxite, and as such, allows for a much broader spectrum of finished products. Roofing tiles, drainage tiles, floor tiles, paver bricks, revetment tiles, cinder blocks, retaining wall components, rail fences, sound barriers, privacy walls, jet blast deflection barriers, security walls, etc., basically anything that can be made of concrete can also be made with concrete and the stabilized tailings added to it. Driveways or patios can be lined with it (it's cheap and durable enough) or Bar-B-Ques can be built with it (it's a refractory brick too). Roadside culverts can be lined with It or river revetments (because it has excellent efflorescence resistance) or the walls of a pig-iron smelter can be lined with it. Also, by adding the stabilized tailings of the invention to standard Portland Cement It can then be used as an inexpensive and durable mortar for refractory brick emplacements .

## Claims

1. A process for forming a cementitious building material containing treated bauxite tailings comprising:
- preparing stabilized red mud;
- preparing a modified Portland cement component by adding 5 to 50 weight percent of silicates to 95 to 50 weight percent of Portfand cement; and
- admixing the modified Portland cement component to a standard aggregate mixture along with up to 30 volume percent stabilized red mud where water is added and the mixture is formed,
wherein the stabilized red mud is prepared from waste streams by the
following steps:
- pulverizing bauxite tailings containing alkaline compounds Into a generally homogeneous powder;
- agitating said powder while adding sufficient water to form a generally free flowing slurry;
- adding sufficient acid to the slurry to neutralize said alkaline compounds to a pH of about 5.5 to 6 to form water and an aqueous solution of the salts of said acid; and
- separating said salts from remaining insoluble slurry material; wherein said acid is sulfuric acid, and wherein sodium sulfate as a portion of the salts of the sulfuric acid that are formed from the neutralizing reaction remain with the insoluble slurry material after removal of water therefrom.

2. The process of claim 1;
wherein said insoluble slurry material is not washed subsequent to separating the aqueous salt solution.

3. The process of claim 1 or 2,
wherein said cementitious building material is compacted and cured to form a brick, and wherein said brick is cured in a super saturated humidity environment for a predetermined time period.

4. The process of claim 3,
wherein said time period is at least 168 hours.

5. The process of claim 1,
wherein the silicates are made from finely ground silicate tailings which are naturally occurring as sand or so called black sand.

## Patentansprüche

1. Verfahren zum Bilden von zementgebundenem Baumaterial, das behandelte Bauxitabfälle enthält, umfassend:
- Herstellen von stabilisiertem Rotschlamm
- Herstellen einer modifizierten Portland-Zement-Komponente durch Zugabe von 5 bis 50 Gew.-% Silikate zu 95 bis 50 Gew.-% Portland-Zement; und
- Beimischen der modifizierten Portland-Zement-Komponente zu einer Standard-Aggregatmischung zusammen mit bis zu 30 Vol.-% stabilisiertem Rotschlamm, wobei Wasser zugegeben und die Mischung gebildet wird;
wobei der stabilisierte Rotschlamm aus Abfallströmen mittels der folgenden Schritte hergestellt wird:
- Vermahlen von Bauxitabfällen, die alkalische Verbindungen enthalten, zu einem im Allgemeinen homogenen Pulver;
- Rühren des Pulvers unter Zugabe von ausreichend Wasser, um eine im Allgemeinen frei fließende Aufschlämmung zu bilden;
- Zugeben von ausreichend Säure zu der Aufschlämmung, um die alkalischen Verbindungen auf einen pH-Wert von ungefähr 5,5 bis 6 zu neutralisieren, um Wasser und eine wässrige Lösung der Salze der Säure zu bilden; und
- Abscheiden der Salze von dem verbleibenden unlöslichen Aufschlämmungsmaterial;
wobei die Säure eine Schwefelsäure ist und wobei Natriumsulfat als Anteil der Salze der Schwefelsäure, die bei der Neutralisierungsreaktion gebildet werden, in dem unlöslichen Aufschlämmungsmaterial nach Entfernung des Wassers daraus verbleiben.

2. Verfahren nach Anspruch 1,
wobei das unlösliche Aufschlämmungsmaterial nicht auf das Abscheiden der wässrigen Salzlösung folgend gewaschen wird.

3. Verfahren nach einem der Ansprüche 1 oder 2,
wobei das zementgebundene Baumaterial verdichtet und gehärtet wird, um einen Ziegel zu bilden, und wobei der Ziegel in einer übersättigten feuchten Umgebung für einen vorbestimmten Zeitraum lang gehärtet wird.

4. Verfahren nach Anspruch 3,
wobei der Zeitraum mindestens 168 Stunden beträgt.

5. Verfahren nach Anspruch 1,
wobei die Silikate aus feingemahlenen Silikatabfällen hergestellt werden, die natürlich als Sand oder sogenannter schwarzer Sand vorkommen.

## Revendications

1. Procédé de fabrication d'un matériau de construction à base de ciment contenant des résidus de bauxite traités, consistant à :
- préparer une boue rouge stabilisée ;
- préparer un constituant sous forme de ciment Portland modifié en ajoutant 5 % à 50 % en poids de silicates à 95 % à 50 % en poids de ciment Portland ; et
- mélanger par addition le constituant sous forme de ciment Portland modifié avec un mélange d'agrégats standard conjointement avec jusqu'à 30 % en volume de boue rouge stabilisée, avec addition d'eau et formation du mélange ;
la boue rouge stabilisée étant préparée à partir de flux de déchets selon une procédure consistant à :
- pulvériser des résidus de bauxite contenant des composés alcalins pour produire une poudre généralement homogène ;
- agiter ladite poudre tout en ajoutant une quantité d'eau suffisante pour former une suspension à écoulement généralement libre ;
- ajouter à la suspension une quantité d'acide suffisante pour neutraliser lesdits composés alcalins jusqu'à l'obtention d'un pH d'environ 5,5 à 6 pour produire de l'eau et une solution aqueuse des sels dudit acide ; et
- séparer lesdits sels du reste du matériau en suspension insoluble ;
ledit acide étant de l'acide sulfurique, et du sulfate de sodium faisant partie des sels de l'acide sulfurique produits par la réaction de neutralisation restant avec le matériau en suspension insoluble après que l'eau a été éliminée de celui-ci.

2. Procédé selon la revendication 1, dans lequel ledit matériau en suspension insoluble n'est pas lavé après la séparation de la solution aqueuse de sels.

3. Procédé selon la revendication 1 ou 2, dans lequel ledit matériau de construction à base de ciment est compacté et durci pour former une brique, et dans lequel ladite brique est durcie dans un milieu sursaturé en eau pendant une période de temps prédéterminée.

4. Procédé selon la revendication 3, dans lequel ladite période de temps est d'au moins 168 heures.

5. Procédé selon la revendication 1, dans lequel les silicates sont préparés à partir de résidus de silicates finement broyés qui existent à l'état naturel sous forme de sable ou de sables noirs.
